# EUROPEAN PATENT APPLICATION

(11) **EP 1 480 451 A2**
(43) Date of publication of application: **24.11.2004**
(21) Application number: 04076354.2
(22) Date of filing: 05.05.2004
(51) Int. Cl.: H04N 5/225

(54) **Multiple-view imaging system**

(30) Priority: 19.05.2003 US 440736
(71) Applicant: Delphi Technologies, Inc., Troy, MI 48007 (US)
(72) Inventor: Miller, Eric A., West Lafayette, IN 47906 (US); Taylor, Ronald M., Greentown, IN 46936 (US)
(74) Representative: Denton, Michael John

(57) **Abstract**

An improved imaging system (12) includes a single solid state interlaced imager device (40) such as a CCD camera chip, a positionable mirror (44), and a controller (48) for re-positioning the mirror (44) in synchronism with the capture of video information by the imager device (40) so as to obtain interlaced video information from multiple selected views.

## Description

### Technical Field

The present invention relates to an imaging system adapted to capture video information pertaining to more than one image.

### Background of the Invention

Imaging systems are finding increased application in non-traditional environments. In the automotive environment, for example, imaging systems are being proposed not only for the purpose of displaying various images to the driver, but also for data collection relevant to occupant detection, obstacle detection, pre-crash sensing, and so on. However, it has become apparent that utilizing multiple individual imaging systems is cost prohibitive in most applications, and is frequently unacceptable from a packaging standpoint. Accordingly what is needed is an improved imaging system that is easily packaged in an automotive environment, and that has the capability of capturing video information from multiple images.

### Summary of the Invention

The present invention is directed to an improved imaging system including a single solid state interlaced imager device such as a CCD camera chip, a positionable mirror, and a controller for re-positioning the mirror in synchronism with the capture of video information by the imager device so as to obtain interlaced video information from multiple views.

### Brief Description of the Drawings

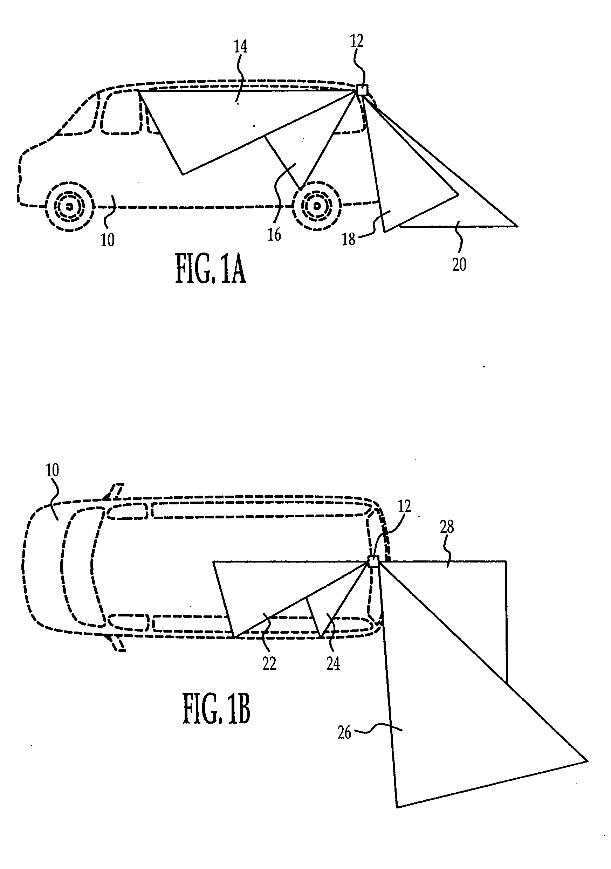

Figures 1A and 1B respectively depict side and overhead views of a motor vehicle with an imaging system according to this invention installed at the rear of the vehicle in the vicinity of a center high-mount stop lamp. Figure 1A illustrates multiple elevation views of interest, while Figure 1B illustrates multiple azimuth views of interest.

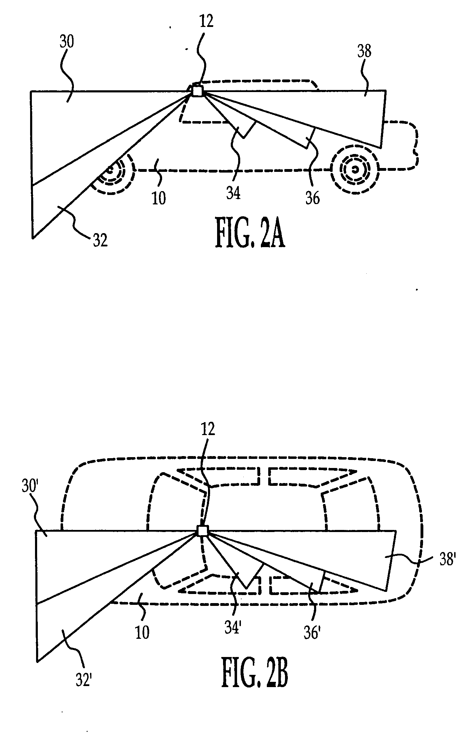

Figures 2A and 2B respectively depict side and overhead views of a motor vehicle with an imaging system according to this invention installed in the forward portion of the passenger compartment in the vicinity of a center-mounted rear-view mirror. Figure 2A illustrates multiple elevation views of interest, while Figure 2B illustrates multiple azimuth views of interest.

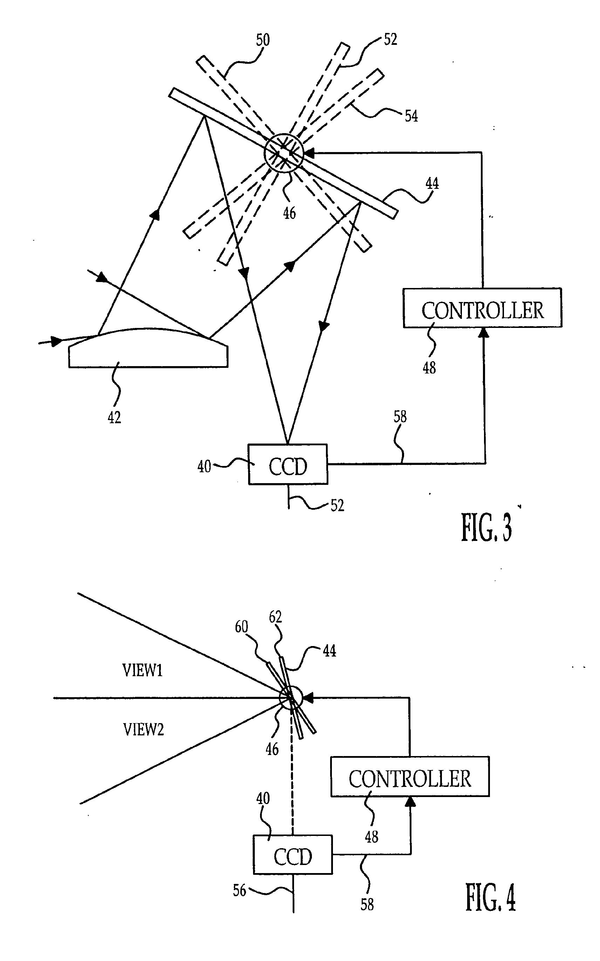

Figure 3 is a diagram of an imaging system according to a first embodiment of this invention, including an interlaced imaging device, a fixed convex mirror, a multi-position flat mirror, and a controller for positioning the flat mirror in synchronism with the capture of video information by the imaging device.
Figure 4 is a diagram of an imaging system according to a second embodiment of this invention, including an interlaced imaging device, a multi-position flat mirror, and a controller for positioning the flat mirror in synchronism with the capture of video information by the imaging device.

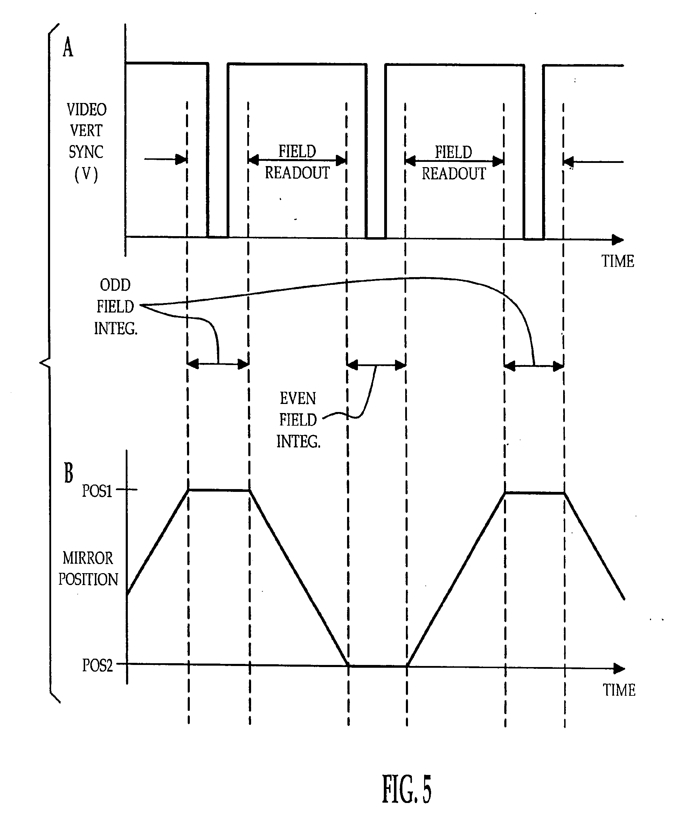

Figure 5, Graphs A and B, depict a mirror control carried out by the controllers of Figures 3 and 4.

### Description of the Preferred Embodiment

While the imaging system of the present invention is described herein in the context of a motor vehicle, it will be appreciated that various non-automotive applications are also possible. Also, the imaging system can be packaged in various vehicle locations other than those discussed herein.

Figures 1A and 1B respectively depict side and overhead views of a motor vehicle 10 having a multiple-view imaging system 12 according to this invention installed in the vicinity of a traditional center high-mount stop lamp, or CHMSL. Figure 1A illustrates multiple scanned elevation views of interest, including first and second views 14, 16 designed to provide child monitoring or occupant detection for the middle and rear seat rows of the vehicle, a third view 18 for purposes of rear impact detection, and a fourth view 20 that serves as a parking aid. The optics of the imaging system 12 are designed to provide a conical field of view in each case so that a single elevation-scanned imager could cover the entire rear portion of the vehicle 10. For example, the first and third views 14, 18 may have a viewing cone of approximately 35°, the second view 16 may have a viewing cone of approximately 20°, the fourth view 16 may have a viewing cone of approximately 45°. Figure 1B illustrates an alternate implementation in which the imaging system 12 is scanned in the azimuth direction to obtain multiple azimuth views of interest (which in actuality are symmetrical about the longitudinal centreline of the vehicle 10), including first and second views 22, 24 designed to provide child monitoring or occupant detection for the middle and rear seat rows of the vehicle, a third view 26 for purposes of impact detection, and a fourth view 28 that serves as a parking aid. As with Figure 1A, the optics of the imaging system depicted in Figure 1B are designed to provide a conical field of view in each case.

Figures 2A and 2B respectively depict side and overhead views of a motor vehicle 10 having a multiple-view imaging system 12 according to this invention installed in the vicinity of a traditional center-mounted rear view mirror. Figure 2A illustrates multiple scanned elevation views of interest, including a first view 30 designed to facilitate lane tracking, a second view 32 designed to facilitate pedestrian protection, a third view 34 designed to facilitate driver eye tracking, and fourth and fifth views 36, 38 designed to provide child monitoring or occupant detection for the middle and rear seat rows of the vehicle. Figure 2B illustrates an alternate implementation in which the imaging system 12 is scanned in the azimuth direction to obtain multiple azimuth views of interest 30', 32', 34', 36', 38' (which in actuality are symmetrical about the longitudinal centreline of the vehicle 10) corresponding to the elevational views of Figure 2A. As with Figures 1A-1B, the optics of the imaging system depicted in Figures 2A-2B are designed to provide a conical field of view in each case.

Figure 3 schematically depicts one embodiment of the imaging system 12 of Figures 1A-1B and 2A-2B. The system includes a solid state interlaced imaging device 40 such as a CCD or CMOS camera, a fixed convex mirror 42, a double-sided planar mirror 44 positioned by an electric motor 46, and a controller 48 responsive to an internal vertical sync signal of imaging device 40 for appropriately positioning the planar mirror 44. In the illustrated embodiment, the controller 48 positions the planar mirror 44 to one of four possible positions: the depicted position and the three alternate positions shown in phantom and designated by the reference numerals 50, 52 and 54. It will be appreciated that the depicted position and the alternate position 50 provide two different left-hand views (corresponding to the views 14 and 16 of Figure 1A, for example), while the alternate positions 52 and 54 provide two different right-hand views (corresponding to the views 18 and 20 of Figure 1A, for example). The imaging device 40 provides a video output on line 56 which may be supplied to a display or video processor, as the particular application requires, and the vertical sync signal is provided to the controller 48 via line 58.

Various other embodiments of the imaging system 12 are also possible, of course. For example, Figure 4 depicts an embodiment in which the convex mirror 42 is omitted, and the planar mirror 44 is positionable to alternately obtain two juxtaposed views, as designated by the reference numerals 60, 62. In other embodiments, the planar mirror 44 may be replaced with a convex or concave mirror, a rotating facet mirror, an axis galvanometer mirror, or a hinged flip-mirror. Also, the mirror 44 may have more or fewer alternate positions than depicted. But in any event, the controller 48 coordinates mirror movement with the data capture of the imager device 40 so that at least two images are interlaced in a single video frame. Thus, whereas a traditional video frame contains interlaced even-numbered and odd-numbered rows of pixels that contain substantially similar information and are alternately integrated at a fixed periodicity and then read out to a capture device, a video frame according to the present invention contains interlaced even-numbered and odd-numbered rows of pixels in which the even-numbered rows contain information from one view and the odd-numbered rows contain information from an entirely different view.

A typical implementation is depicted in Graphs A and B of Figure 4, where Graph A depicts a vertical sync pulsetrain (V) and Graph B depicts mirror position, both as a function of time. The vertical sync pulses initiate the alternate row pixel integration process every 16.66ms for an information capture rate of 30 frames/second, and the obtained video data is read out to the capture device in a field readout period between sync pulses as indicated. As indicated in Graph B, the mirror movement occurs during the field readout periods so that two (or more) different views can be captured in a single video frame with no sacrifice with respect to the frame rate of the interlaced imager 40, regardless of the angular separation of the views.

In summary, the present invention provides an imaging system that is capable of capturing video information pertaining to two or more different views with a single interlaced imaging device without degrading its frame rate. While described in reference to the illustrated embodiments, it is anticipated that various modifications in addition to those mentioned above will occur to those skilled in the art. For example, the views may be entirely different as shown, or may be segments of a single view (in which case subsequent processing may be used to combine the two views into a single wide angle view). Accordingly, it will be understood that imaging systems including these and other modifications may fall within the scope of this invention, which is defined by the appended claims.

## Claims

1. An imaging system (12), comprising:
an interlaced imaging device (40);
a first mirror (44) that is adjustable about an axis for presenting a view to said imaging device (40);
means (46) for adjusting said first mirror (44) about said axis in response to a position control signal to change the view presented to said imaging device (40); and
means including a controller (48) for generating said position control signal in response to a data acquisition control signal (58) of the imaging device (40) such that interlaced video data produced by said imaging device (40) includes data pertaining to two or more different views.

2. The imaging system of Claim 1, wherein said data acquisition control signal (58) is a vertical synchronization control signal that coordinates readout of said video data.

3. The imaging system of Claim 2, wherein the position control signal generated by said controller (48) produces adjustment of said first mirror (44) during a video data readout period of said imaging device (40).

4. The imaging system of Claim 1, wherein said first mirror (44) is planar with two major surfaces that each reflect incident light.

5. The imaging system of Claim 1, further comprising:
a second mirror (42) that is fixed with respect to said imaging device (40), and that works in concert with said first mirror (44) to present the view to said imaging device (40).

6. The imaging system of Claim 5, wherein said second mirror (42) is a convex mirror.

7. An imaging system (12) for a motor vehicle (10), comprising:
an interlaced imaging device (40);
a first mirror (44) that is adjustable about an axis for presenting a view of said vehicle (10) or a region in proximity to said vehicle (10) to said imaging device (40);
means (46) for adjusting said first mirror (44) about said axis in response to a position control signal to change the view presented to said imaging device (40); and
means including a controller (48) for generating said position control signal in response to a data acquisition control signal (58) of the imaging device (40) such that interlaced video data produced by said imaging device (40) includes data pertaining to two or more different views.

8. The imaging system of Claim 7, wherein said imaging system (12) is located on a longitudinal axis of said vehicle (10).
